# EUROPEAN PATENT APPLICATION

(11) **EP 4 795 941 A1**
(43) Date of publication of application: **26.08.2026**
(21) Application number: 24879355.6
(22) Date of filing: 13.03.2024
(51) Int. Cl.: A23N 12/08, A23F 5/04

(54) **BEAN ROASTING MACHINE**

(30) Priority: 17.10.2023 JP 2023178780
(71) Applicant: I. C. Electronics Industry Co., Ltd., Isesaki-shi, Gunma 379-2235 (JP)
(72) Inventor: IGUSA, Masaru, Isesaki-shi, Gunma 379-2235 (JP); HAKODA, Shigeo, Isesaki-shi, Gunma 379-2235 (JP); NAKAJIMA, Sachi, Isesaki-shi, Gunma 379-2235 (JP)
(74) Representative: TBK
(86) International application number: PCT/JP2024/009800
(87) International publication number: WO 2025/083923

(57) **Abstract**

There is provided an inexpensive and compact bean roasting machine that is easy for an operator to use, facilities daily maintenance, consumes little power, makes little noise, and is highly safe. A bean roasting machine 20 includes: a heater device 40 as a heat source for roasting; and a roasting blower 37 that sends high-pressure air into the heater device 40 and sends the air becoming a high temperature by the heater device 40 into the roasting pot 23, in which the heater device 40 is disposed directly below the central bottom of the roasting pot 23, an air blowing outlet 40b of the heater device 40 opens upward and is directly connected to an air intake inlet 23a formed in the central bottom of the roasting pot 23, and the air intake inlet 40a of the heater device 40 is located on a side surface of the heater device 40 and is directly connected to a blowing port 37a of the roasting blower 37. Thus, the central bottom of the roasting pot 23 is close proximity to the heater device 40, and the heater device 40 and the roasting pot 23 are directly connected to each other, whereby hot air blown from the roasting blower 37 to the heater device 40 flows smoothly into the roasting pot 23, and heat loss and windage loss are extremely reduced.

## Description

### Technical Field

The present invention relates to a highly efficient, compact, and inexpensive bean roasting machine that can roast and cool beans, particularly, nuts, coffee beans, and the like, evenly and efficiently in a short time.

### Background Art

Conventionally, bean roasting machines disclosed in Japanese Patent No. 3637434 and the like have been proposed as apparatuses for roasting coffee beans or similar beans using hot air.

These apparatuses have a structure in which hot air is partially jetted from a central bottom of a cone-shaped roasting pot along an inner surface of the roasting pot to efficiently heat and roast beans while stirring the beans, and chaff peeling off from the beans during roasting are sent to a filter device through a chaff collection duct connected to a center of a top cover of the roasting pot, the chaff being separated from air by a wire mesh filter of the filter device and entering a chaff collection box provided below.

In addition, a structure for collecting beans that have finished roasting in the roasting pot has a structure in which an opening/closing member, which opens and closes a bean collection hole provided at a center of the bottom of the roasting pot, moves upward to open the bean collection hole and the roasted beans fall from the bean collection hole by its own weight and are collected into a cooling chamber provided below through a cooling passage.

Furthermore, a structure for cooling the roasted beans has a structure in which the beans are cooled by air blown from a roasting blower and the air used to cool the beans is sent to the filter device through a bean cooling duct and is exhausted outside the roasting machine.

However, unlike a drum-type roasting machine, the conventional hot air-type roasting machine does not include a drive device for rotating or tilting a drum, and thus can provide a roasting machine that has a simpler structure, is less prone to malfunctions, and produces beans with less baking unevenness, as compared to the drum-type roasting machine, but since the hot air-type roasting machine has a structure in which beans are stirred by wind power, a roasting blower of large-capacity and high-output is required, and a large amount of heat are also emitted by the roasting blower, whereby a heater device of large-capacity and high-output is also required.

Furthermore, since the roasting blower and the heater device are large-capacity and high-output and thus are large and heavy, these devices have to be disposed at a lowermost bottom of the roasting machine, whereby the roasting pot located at the top of the roasting machine is distant from the heater device, and the roasting blower and the heater device need to be disposed apart from each other in consideration of a weight distribution of the roasting machine.

On the other hand, using cylindrical flexible pipes called ducts, the roasting blower and the heater device are connected to each other and the heater device and the roasting pot are connected to each other, but since these devices are spaced apart from each other, the flexible pipes become long, which causes problems in that windage loss and heat loss within the flexible pipes increase.

In order to ensure the amount of heat and airflow required for roasting inside the roasting pot, the roasting blower and the heater device with large-capacity and high-output have been required, which causes problems in that the roasting machine becomes large in size and expensive in costs and noise increases.

Furthermore, since the chaff collection duct is connected near the center of the top cover of the roasting pot, not only the overall height of the roasting machine increases, but also there has been a problem of daily maintenance in that the top cover cannot be easily removed during cleaning of the inside of the roasting pot.

Furthermore, since the chaff collection box for collecting the chaff sent into the filter device needs to be disposed at a relatively low position for easy operation, the flexible pipe connecting the top cover and the chaff collection box becomes long, and chaff and bean fragments accumulate in a bent portion within the flexible pipe, resulting in windage loss and making it impossible to obtain airflow necessary for roasting, and also resulting in a problem in that a risk of fire increases due to combustion of the chaff or the like.

On the other hand, the beans, which have been roasted to a predetermined roasting level, need to be moved from the roasting pot to a cooling box as quickly as possible and to be cooled in order to prevent from being roasted further, but the structure of the roasting machine disclosed in Japanese Patent No. 3637434 has a problem that when air to stir beans is continuously sent from the center of the bottom of the roasting pot, the beans move diagonally upward in the roasting pot, the distance to the bean collection hole in the center of the bottom of the roasting pot increases, and thus it takes a long time to collect the roasted beans. To solve the problem, measures can be considered to stop the operation of the roasting blower during bean collection, or to reduce an airflow to facilitate the beans to fall by its own weight, but, in particular, during roasting of beans for iced coffee, since the beans are roasted darkly, there are also problems that not only the beans release oil and take a long time to fall by its own weight, but also the beans stick to the roasting pot and remain inside the roasting pot.

Due to these problems, an actual roasting machine does not adopt the roasting machine disclosed in Japanese Patent No. 3637434, that is, the structure in which the opening and closing member provided at the central bottom of the cone-shaped roasting pot moves upward to open the bean collection hole and the roasted beans in the roasting pot fall by its own weight and are guided to the cooling chamber provided below through the cooling passage.

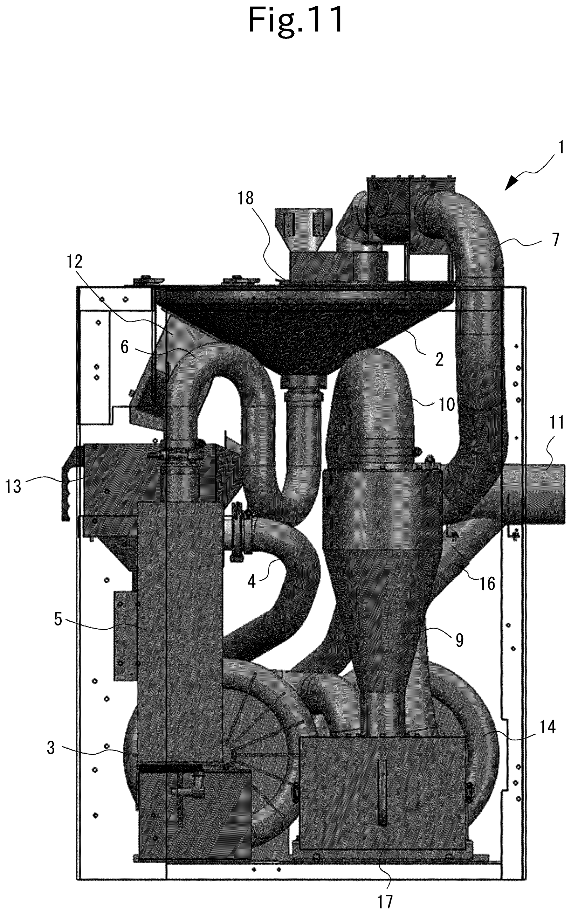

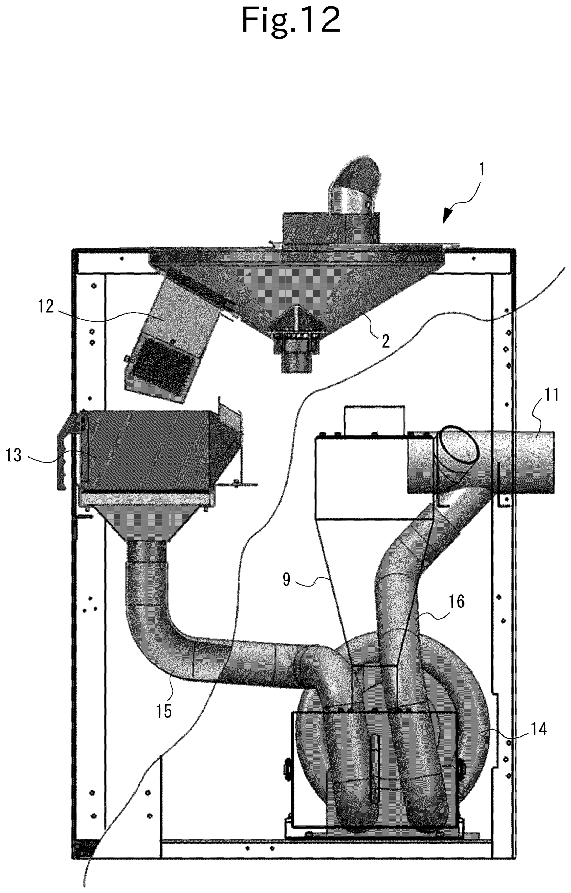

Therefore, a roasting machine 1 shown in Figures 11 and 12 is actually adopted and installed. Figure 11 is a right side view of the roasting machine 1, and Figure 12 is a right side view of the roasting machine 1 showing only a relationship between components and ducts involved in cooling of beans.

A structure for sending hot air for roasting into a roasting pot 2 will be described with reference to Figure 11. In other words, room temperature air is pressure-fed into a heater device 5 via a heater device-inlet duct 4 (size: φ 50 mm × 700 mm) connected to an outlet side of a roasting blower 3. Thus, air flowing in the heater device 5 is heated to 300°C or higher. The heated air is pressure-fed from a center of a bottom of a roasting pot 2 to the inside of the roasting pot 2 via a heater device-outlet duct 6 (size: φ 50 mm × 1100 mm).

In addition, a structure for exhausting air from the inside of the roasting pot 2 will be described with reference to Figure 11. In other words, the air exhausted from the roasting pot 2 together with chaff is sent to a filter device 9 through a chaff collection duct 7 (size: φ 75 mm × 700 mm) connected to a top of a fixed lid 18. Thus, the chaff and the air are separated from each other inside the filter device 9, and the separated air is then exhausted outside the roasting machine 1 from the exhaust manifold 11 through a hot air exhaust duct 10 (size: φ 100 mm × 500 mm).

Since the hot air heated to 300°C or higher by the heater device 5 is lowered in temperature when passing through the heater device-outlet duct 6, although the heater device-outlet duct 6 is covered with a heat insulating material (not shown), the air temperature needs to be kept 300°C or higher even with a large airflow of the roasting blower 3 in addition to generation of heat loss, so the heater device 5 is a large-capacity heater with three-phase 200 V/12 kW.

Next, a cooling structure for roasted beans will be described with reference to Figures 11 and 12. Beans roasted to a roasting level in the roasting pot 2 are collected in a bean storage box 13 through a bean collection passage 12 when a bean collection door (not shown) disposed on an inclined surface of the roasting pot 2 is opened. A punched metal member (not shown) with numerous holes, which are small enough that the beans cannot pass through, are formed on a bottom surface of the bean storage box 13, and when a cooling blower 14 is operated, room temperature air is sucked into the bean storage box 13 from above through a first bean cooling duct 15 (size: φ 100 mm × 800 mm) below the bean storage box 13, and thus the beans inside the bean storage box 13 are forcibly cooled.

Furthermore, the air, which has cooled the beans and been heated, is exhausted from an exhaust port (not shown) of the cooling blower 14 through a fan (not shown) of the cooling blower 14 from an air inlet (not shown) of the cooling blower 14, the air being blown to the exhaust manifold 11 through a second bean cooling duct 16 (size: φ 50 mm × 800 mm), and being exhausted to a back of the roasting machine 1 in a state of being mixed with the high-temperature hot air blown from the hot air exhaust duct 10 of the exhaust manifold 11.

Generally, the high-temperature hot air is not directly exhausted to the back, and since an exhaust duct on a shop side is connected to the outlet side of the exhaust manifold 11, the high-temperature exhaust air is exhausted outdoors.

### Citation List

### Patent Literature

Patent Literature 1: Japanese Patent No. 3637434

### Summary of Invention

### Technical Problem

However, since the bean roasting machine 1 installed actually as described latter is configured to suck room temperature air from above the bean storage box 13, oils extracted from the roasted beans and recrystallized caffeine adhere to the inside of the cooling blower 14, and thus fins stick and become unable to rotate, whereby an operator should periodically perform disassembling and cleaning work on the cooling blower 14, which is a troublesome task.

Furthermore, the air blown out from the roasting blower 3 reaches the exhaust manifold 11 through various ducts which are interposed therebetween and include the heater device-inlet duct 4, the heater device-outlet duct 6, the chaff bean collection duct 7, and the hot air exhaust duct 10, and the ducts have a total length of 3 m and have a complicatedly bent structure, whereby the roasting blower 3 needs to be a large-capacity type with three-phase 200 V/2 kW to overcome windage loss of these ducts and to stir the beans. This results in problems that the roasting blower 3 becomes large and expensive and driving noise of the roasting blower 3 also increases.

Furthermore, since the ducts between the roasting blower 3 and the exhaust manifold 11 have the total length of 3 m and have a complicatedly bent structure, there is no space available to dispose a chaff collection box 17 in front of the roasting machine 1 to store chaff that needs to be scrapped periodically by the operator, and therefore the chaff collection box 17 is provided on a right side of the roasting machine 1. Here, it is necessary to open a side cover (not shown) of the roasting machine 1 and remove the chaff collection box 17 therein in a case of scrapping the chaff in the chaff collection box 17, but a free space of a minimum 430 mm is usually required on the right side of the roasting machine 1 to perform the removal work. Therefore, when a large roasting machine 1 with product sizes of 750 mm wide × 775 mm deep × 1340 mm high is installed, an occupancy space of 1180 mm wide × 775 mm deep including the space for the chaff collection work is required, and thus there is also a problem that the large roasting machine cannot be installed in a small shop.

Furthermore, as in the former roasting machine disclosed in Patent Literature 1, since the chaff collection duct 7 is connected to the fixed lid 18 of the roasting pot 2, not only the overall height of the roasting machine 1 increases, but also the fixed lid 18 cannot be easily removed during cleaning of the inside of the roasting pot 1, resulting in causing a problem in terms of daily maintenance; and since the chaff collection duct 7 communicates with the chaff collection box 17 located at the bottom of the roasting machine 1, the passage of the chaff collection duct 7 becomes long, which makes it more susceptible to accumulation of the chaff and makes the structure unfavorable in terms of safety, such as fire.

In order to solve these problems, a bean roasting machine according to the present invention is a bean roasting machine having a structure in which hot air is partially jetted from a central bottom of a cone-shaped roasting pot along a surface of the roasting pot to efficiently heat and roast beans while stirring the beans, and an object of the present invention is to provide an inexpensive and compact bean roasting machine that drastically reduces heat loss and windage loss in parts other than the roasting pot, is easy for an operator to use, facilities daily maintenance, consumes little power, makes little noise, and is highly safe.

### Solution to Problem

In order to achieve the above object, the invention of claim 1 provides a bean roasting machine in which hot air is jetted from a central bottom of a cone-shaped roasting pot in a direction oblique to a radial direction of the roasting pot to stir and roast beans, the bean roasting machine including: a heater device as a heat source for roasting; and a roasting blower that sends high-pressure air into the heater device and sends the air becoming a high temperature by the heater device into the roasting pot, in which the heater device is disposed directly below the central bottom of the roasting pot, an air blowing outlet of the heater device opens upward and is directly connected to an air intake inlet formed in the central bottom of the roasting pot, and an air intake inlet of the heater device is located on a side surface of the heater device and is directly connected to a blowing port of the roasting blower.

According to the invention of claim 1, the central bottom of the roasting pot is close proximity to the heater device, and the heater device and the roasting blower are directly connected to each other, whereby the air is blown from the roasting blower to the heater device, the hot air supplied from the heater device to the roasting pot flows smoothly, and the heat loss and the windage loss are extremely reduced. Therefore, the heater device and the roasting blower can be made smaller, and power consumption can be reduced.

The invention of claim 2 has a structure in which the bean roasting machine includes: a chaff collection duct through which exhaust air containing chaff within the roasting pot passes; a cyclone that takes in the exhaust air through the chaff collection duct and separates the chaff from the exhaust air; and a chaff collection box that collects the chaff separated by the cyclone, in which an upper part of a sidewall of the roasting pot includes an annular edge portion extending vertically over a predetermined width, an inlet side of the chaff collection duct is connected to the annular edge portion, and an outlet side of the chaff collection duct is connected to an upper part of a side surface of the cyclone, and the chaff collection box is disposed at a lower part of the cyclone and is provided to be removable from a front of the roasting machine.

According to the invention of claim 2, the inlet of the chaff collection duct is connected to the annular edge portion formed on the sidewall of the roasting pot, rather than to the upper surface of the roasting pot, whereby the chaff collection duct does not protrude above the roasting pot, and thus the roasting machine becomes small in the height dimension, which can be downsized. In addition, since the chaff collection box can be removed from the front of the roasting machine, no operating space of the chaff collection box is required on the side of the roasting machine, and operability is also improved.

The invention of claim 3 has a structure in which a bean collection hole is provided in a part of an inclined portion, which is inclined obliquely downward from a lower end of the annular edge portion, of the sidewall of the roasting pot to discharge roasted beans, and the bean roasting machine includes: a bean collection mechanism including a bean collection door for opening and closing the bean collection hole; a bean collection passage that communicates with the bean collection hole and guides the roasted beans discharged from the bean collection hole out of the roasting pot; a bean cooling box that communicates with an outlet of the bean collection passage and receives the roasted beans flowed out of the bean collection passage; a bean storage box that is detachably housed in the bean cooling box to store the roasted beans flowed into the bean cooling box; and a bean cooling fan that is provided in the bean cooling box to blow air into the bean storage box and to cool the roasted beans.

According to the invention of claim 3, when the bean collection door opens the bean collection hole, the roasted beans in the roasting pot fall through the bean collection hole and move sequentially through the bean collection passage, the bean cooling box, and the bean storage box. Then, the roasted beans stored in the bean storage box are cooled by the air blown out from the bean cooling fan. Here, since the bean cooling fan is provided in the bean cooling box, the air blown out from the bean cooling fan hits the beans directly in the bean storage box and the beans can be cooled efficiently, and thus bean cooling fan can be downsized. In addition, since the bean cooling fan blows out air to send it to the bean storage box, the air already used to cool the beans does not flow in the bean cooling fan from the bean storage box, whereby contamination of the bean cooling fan is reduced, maintenance of the bean cooling fan is made to be almost unnecessary.

The invention of claim 4 has a structure in which the bean roasting machine includes: a bean cooling duct that is connected to an exhaust port of the bean cooling box to ventilate exhaust air used to cool the roasted beans; an exhaust duct that is connected to the cyclone to ventilate exhaust air from which chaff inside the cyclone is separated; and an exhaust manifold that is connected to an outlet side of the exhaust duct and an outlet side of the bean cooling duct to gather the exhaust air from the exhaust duct and the bean cooling duct and to ventilate the gathered exhaust air outside the roasting machine.

According to the invention of claim 4, since the bean cooling duct, which ventilates the exhaust air used to cool the roasted beans, and the exhaust duct, which ventilates the exhaust air from the cyclone, are connected to a single exhaust manifold, not only the entire roasting machine can be made more compact, but also the high-temperature exhaust air during the roasting and the room-temperature exhaust air from the bean cooling fan are exhausted from one location in a state of being mixed, and thus the temperature of the exhaust air from the roasting machine can be kept low, whereby the roasting machine with less risk of burns or fire can be provided.

The invention of claim 5 has a structure in which the bean collection door includes control means for controlling the bean collection mechanism so as to close the bean collection hole during roasting, open the bean collection hole during bean collection, and close the bean collection hole when a temperature inside the roasting pot drops below a predetermined temperature during bean cooling.

According to the invention of claim 5, in the initial stage of cooling the beans, the air exhausted from the bean cooling box has two routes including a route in which air is exhausted from the exhaust port and a route in which air is exhausted from the exhaust port of the cyclone by passing through the roasting pot from the bean collection hole, and windage loss can be reduced by exhausting the air from these two routes. Therefore, the beans in the bean storage box are stirred in a dancing state in the wind from the bean cooling fan, the beans are evenly exposed to the wind, and thus the beans can be cooled in a short time. In addition, when the temperature inside the roasting pot drops below a predetermined temperature, the bean collection hole can be closed to maintain the temperature at which the next bean roasting can be continuously performed, whereby the time required for continuous roasting can be shortened, and the roasting machine can be provided that can roast many beans in a short time using many variations of roasting methods.

### Advantageous Effects of Invention

according to the present invention, the central bottom of the roasting pot is close proximity to the heater device, and the heater device and the roasting pot are close proximity to each other, whereby the air is blown from the roasting blower to the heater device, the hot air supplied from the heater device to the roasting pot flows smoothly, and the heat loss and the windage loss are extremely reduced, which has an effect of making it possible to make the heater device and the roasting blower smaller and to reduce power consumption.

### Brief Description of Drawings

Figure 1 is a perspective view of a bean roasting machine according to the present invention.
Figure 2 is a partial cross-sectional view showing main components of the bean roasting machine according to the present invention.
Figure 3 is an enlarged cross-sectional view showing a connection structure between a central bottom of a roasting pot and an outlet of a heater device.
Figure 4 is a simplified cross-sectional perspective view of a bean collection mechanism showing a state where a bean collection door is opened.
Figure 5 is a simplified cross-sectional perspective view of a bean collection mechanism showing a state where the bean collection door is closed.
Figure 6 is a perspective view showing a state where a bean cooling box and a bean storage box are assembled.
Figure 7 is a block diagram showing drive control of the bean roasting machine according to the present invention.
Figure 8 is flowchart 1 showing the drive control of the bean roasting machine according to the present invention.
Figure 9 is flowchart 2 showing the drive control of the bean roasting machine according to the present invention.
Figure 10 is a time chart showing the drive control of the bean roasting machine according to the present invention.
Figure 11 is a right side view of a conventional roasting machine.
Figure 12 is a right side view showing a bean cooling equipment of the conventional roasting machine.

### Description of Embodiments

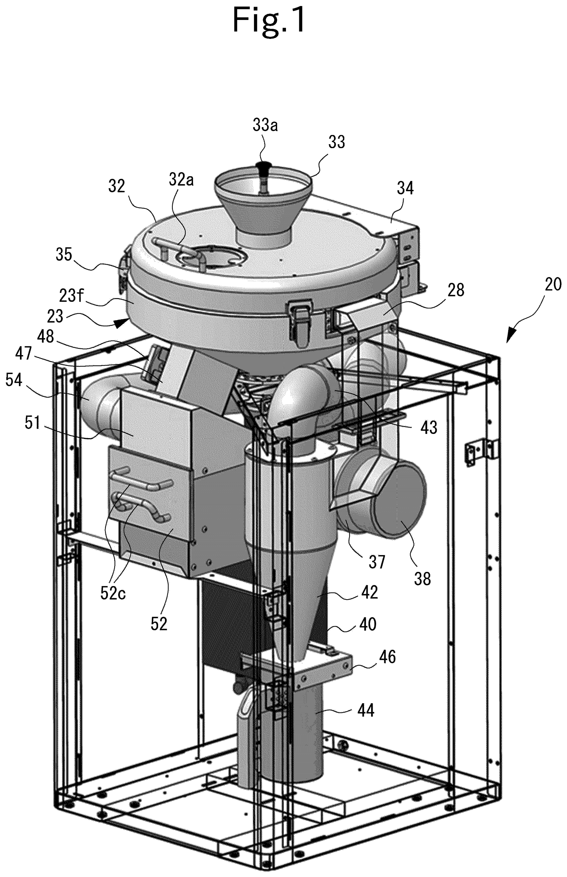

Figures 1 to 10 show an embodiment of a roasting machine according to the present invention.

As shown in Figures 1 to 6, a bean roasting machine 20 according to the present embodiment is configured by the following components.

In other words, the bean roasting machine includes: a roasting pot 23 that roasts coffee beans; a heater device 40 that is a heat source of the roasting pot 23; a roasting blower 37 that sends high-pressure air into the heater device 40 and sends the air becoming high temperature by the heater device 40 into the roasting pot 23; a chaff collection duct 28 through which exhaust air containing chaff within the roasting pot 23 passes; a cyclone 42 that takes in the exhaust air through the chaff collection duct 28 and separates the chaff from the exhaust air; a chaff collection box 44 that collects the chaff separated by the cyclone 42; a bean collection mechanism 48 including a bean collection door 49 for opening and closing a bean collection hole 23h of the roasting pot 23; a bean collection passage 47 that communicates with the bean collection hole 23h and guides the roasted beans discharged from the bean collection hole 23h out of the roasting pot 23; a bean cooling box 51 that communicates with an outlet 47b of the bean collection passage 47 and receives the roasted beans flowed out of the bean collection passage 47; a bean storage box 52 that is detachably housed within the bean cooling box 51 to store the roasted beans flowed into the bean cooling box 51; a bean cooling fan 53 that is provided in the bean cooling box 51 to blow air into the bean storage box 52 and to cool the roasted beans; a bean cooling duct 54 that is connected to an exhaust port 51c of the bean cooling box 51 to ventilate the exhaust air that has cooled the roasted beans; an exhaust duct 43 that is connected to the cyclone 42 to ventilate the exhaust air from which the chaff inside the cyclone has been separated; and an exhaust manifold 45 that is connected to an outlet side of the exhaust duct 43 and an outlet side of the bean cooling duct 54 to gather the exhaust air from the exhaust duct 43 and the bean cooling duct 54 and to ventilate the gathered exhaust air outside the roasting machine 20.

Hereinafter, a structure of the roasting machine 20 according to the embodiment will be described in detail with reference to Figures 1 to 10.

The roasting pot 23 includes a sidewall 23e having a cone shape as shown in Figures 1 to 3. The sidewall 23e is configured by an annular edge portion 23f that is located at a top of the sidewall 23e and extends vertically over a predetermined width and an inclined portion 23g that extends obliquely downward from a lower end of the annular edge portion 23f. In addition, a heat insulating member 23j is provided on an outer side of the sidewall 23e.

The heater device 40, which serves as a heat source, is disposed directly below a central bottom of the roasting pot 23, and the roasting blower 37 is disposed behind the heater device 40 to send high-pressure air to the heater device 40. An air inlet filter 38 is attached to an intake port side of the roasting blower 37 such that clean air is always sent to the heater device 40.

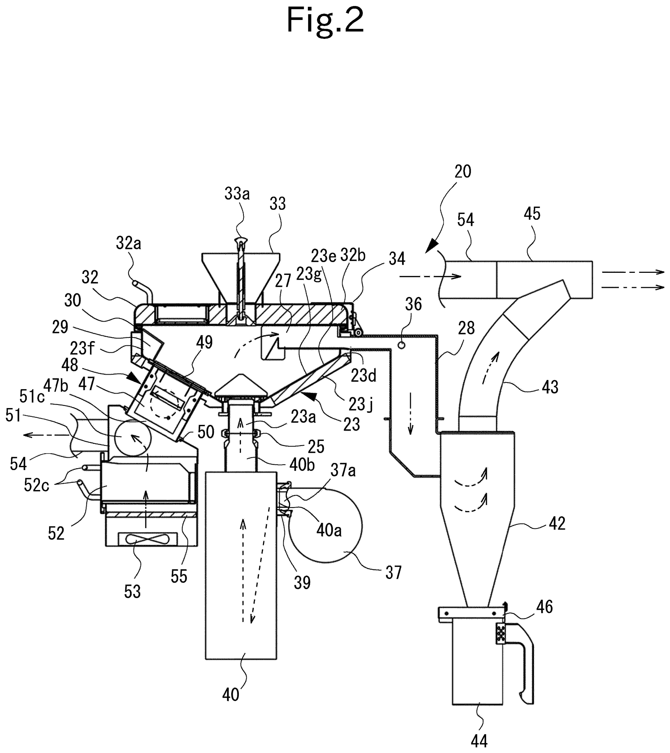

In addition, a roasting pot lid 32 insulated by a heat insulating member 32b is provided at a top opening portion of the roasting pot 23, as shown in Figures 1 and 2. The roasting pot lid 32 is supported to be opened and closed freely by a lid hinge 34 and a lid latch 35, and closes the roasting pot 23 airtightly via a pot packing 30. A hopper 33 is disposed at a top of the roasting pot lid 32 to store raw beans, and the raw beans are transferred into the roasting pot 23 by pressing a hopper lever 33a.

Here, the roasting pot 23 requires regular cleaning and maintenance; during the cleaning and maintenance, the lid latch 35 is removed and a roasting pot handle 32a is grasped by hand and rotated up, and the roasting pot lid 32 can be fixed at any open angle by the lid hinge 34, whereby the cleaning and maintenance in the roasting pot 23 can be performed easily.

Furthermore, as shown in Figures 1 and 2, the chaff collection duct 28 is connected to a right side of the roasting pot 23, and an outlet side of the chaff collection duct 28 is connected to a cylindrical upper part of the cyclone 42. The upper part of the cyclone 42 is connected to the collecting exhaust pipe 45 via the exhaust duct 43, while the chaff collection box 44 is disposed at a lower part of the cyclone 42 via a box mounting plate 46, the chaff collection box 44 being configured to be detachably attachable and removable from a front of the roasting machine 20.

Furthermore, as shown in Figures 1 and 2, the bean collection passage 47 is connected to the inclined portion 23g of the roasting pot 23, and the bean collection mechanism 48 including the bean collection door 49 is installed in the bean collection passage 47. The bean cooling box 51 is disposed below the bean collection passage 47. A front opening portion of the bean cooling box 51 is closed by the bean storage box 52 which is detachable, the exhaust port 51c connected to the bean cooling duct 54 is provided on an upper left side of the front of the bean cooling box 51, and exhaust air after cooling the beans through the bean cooling duct 54 is guided to the exhaust manifold 45, which is provided at the rear of the roasting machine.

As shown in Figure 2, the roasting blower 37 is disposed to be close to and face an upper part of the side surface of the heater device 40, and a blowing port 37a of the roasting blower 37 is directly connected to an air intake inlet 40a of the heater device 40 and is airtightly connected via a heater device-inlet packing 39 which is an elastic sealing member.

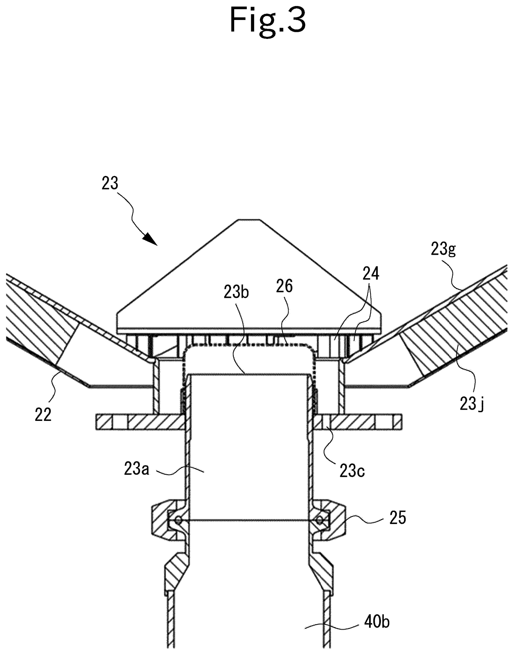

As shown in Figures 2 and 3, an air blowing outlet 40b of the heater device 40 is also airtightly connected to the air intake inlet 23a of the roasting pot 23 with a ferrule 25 made of a metal. Here, the outlet 40b and the inlet 23a are both metal pipes disposed in a straight line without any flexible pipes. Thus, the air blown out from the roasting blower 37 is blown into the heater device 40, the outlet 40b of the heater device 40, the inlet of the roasting pot 23, and the roasting pot 23, as indicated by dashed arrows in Figure 2.

In the conventional roasting machine, the flexible pipe disposed between the outlet of the heater device and the inlet of the roasting pot is curved into a U-shape to trap bean dregs, foreign materials, and water from above. In contrast, the roasting machine 20 according to the present embodiment is configured in which the outlet 40b and the inlet 23a are metal pipes disposed in a straight line without any flexible pipes, thereby minimizing heat loss and windage loss.

On the other hand, as shown in Figure 3, a wire mesh 26 is installed at an upper end portion 23b of the inlet 23a in place of the conventional trap structure. Here, since the wire mesh 26 has a mesh opening size of 1.52 mm, bean dregs and foreign materials can be prevented from falling directly into the heater device 40 from above. In addition, since small holes 23c are provided at the upper end portion 23b of the roasting pot 23 and at a lowest surface of a space provided outside the pot to prevent water infiltrating the pot from entering the heater device 40, safety is ensured under actual usage conditions while heat loss and windage loss are prevented.

In addition, fins 24 are fixed with screws to the lower center of the roasting pot above the wire mesh 26 to jet hot air pressure-fed into the roasting pot 23 in a direction oblique to a radial direction of the roasting pot 23 to stir the beans. The outside of the roasting pot 23 is covered with the heat insulating member 23j, and a heat insulating cover 22 is disposed outside the heat insulating member to prevent heat dissipation from the roasting pot 23 and reduce heat loss.

A square hole 23d opens in part of the annular edge portion 23f of the roasting pot 23, and a U-shaped chaff collection passage 27 in the roasting pot 23 protrudes through the square hole 23d toward the center of the roasting pot 23. In addition, the lower surface of the roasting pot lid 23 is designed to maintain a certain distance from an upper opening portion of the chaff collection passage 27 in the roasting pot 23, and such a clearance prevents beans from entering the chaff collection passage 27.

Furthermore, an outlet side of the chaff collection passage 27 is connected to an upper side of the cyclone 42 through the chaff collection duct 28 having a box shape. Thus, the chaff collection duct 28 is connected to the roasting pot 23 through the chaff collection passage 27.

A temperature sensor 36 is disposed at the inlet side of the chaff collection duct 28, and an air temperature detected by the temperature sensor 36 is used, as a substitute characteristic for the air temperature inside the roasting pot 23, for a temperature profile and other operation control during roasting.

The upper part of the cyclone 42 is connected to the exhaust manifold 45 through the exhaust duct 43, and the chaff collection box 44 is detachably disposed at the lower part of the cyclone 42 through the box mounting plate 46. The chaff collection box 44 is disposed to be removed from the front of the roasting machine 20.

Here, the chaff collection duct 28 has a rectangular cross section of 40 × 90 mm and a length of approximately 400 mm, and the exhaust duct 43 has a size of φ 75 × 600 mm, so the total length of the duct is 1000 mm, which is 1/3 of the conventional roasting machine, whereby the windage loss is extremely reduced compared to the conventional roasting machine. Thus, the roasting blower 37 can be a small-capacity type with a single phase 200 V/800 W and is capable of stirring and roasting beans, and the roasting machine 20 can be made small size, low cost, and low noise.

Furthermore, the outlet 40b of the heater device 40 and the inlet 23a of the roasting pot 23 are directly connected to each other, and thus the hot air heated to 280°C or higher by the heater device 40 is sent into the roasting pot 23 with almost no heat loss without using heat insulating materials, whereby the heater device 40 can also be a capacity type with a single phase 200 V/8 kW, and thus the small and inexpensive heater device 40 can be adopted.

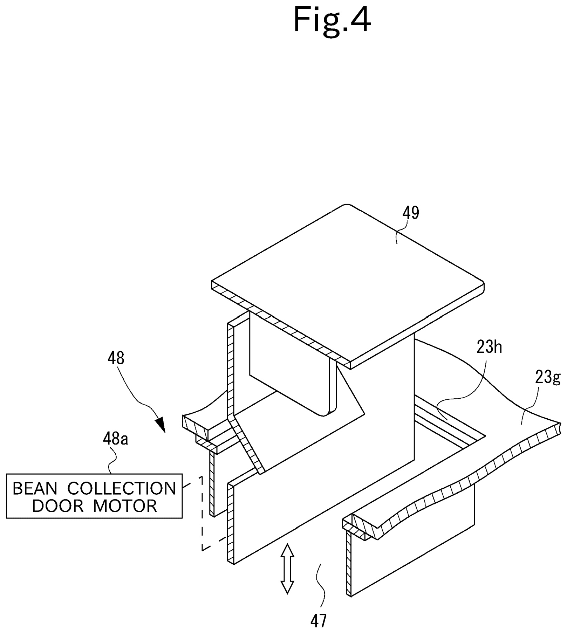

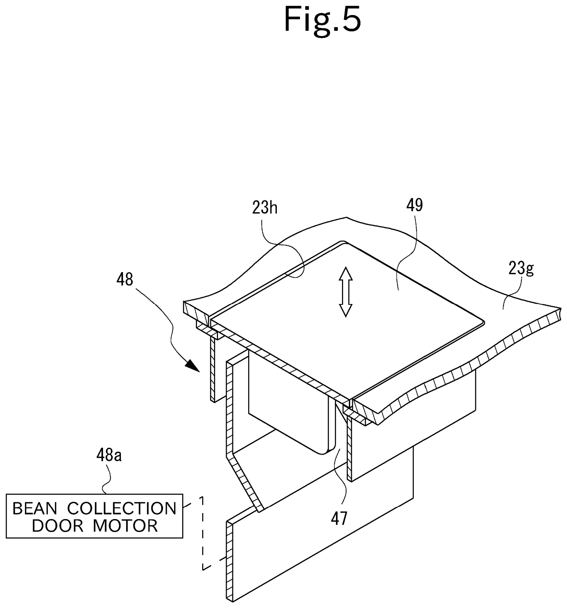

As shown in Figures 4 and 5, the bean collection hole 23h is formed in part of the inclined portion 23g of the roasting pot 23. Figures 4 and 5 show a state in which the inclined portion 23g and the bean collection hole 23h are flat and the bean collection door 49 operates relative to these members.

The bean collection hole 23h opens obliquely in a square hole shape along the inclined portion 23g, and is opened and closed by the bean collection door 49. In addition, the bean collection door 49 moves upward and downward under drive control of the bean collection mechanism 48 including a bean collection door motor 48a, and is configured to open and close the bean collection hole 23h. In other words, as shown in Figure 4, when the bean collection door motor 48a is driven to move the bean collection door 49 upward, the bean collection hole 23h opens, and as shown in Figure 5, when the bean collection door 49 is moved downward, the bean collection hole 23h is closed. A bean collection guide 29 is disposed near the bean collection door 49 at the annular edge portion 23f to guide the beans inside the roasting pot 23 to the bean collection hole 23h.

The bean collection hole 23h is connected with the bean cooling box 51 in which the bean storage box 52 is housed through the bean collection passage 47, as shown in Figures 1, 2, and 6.

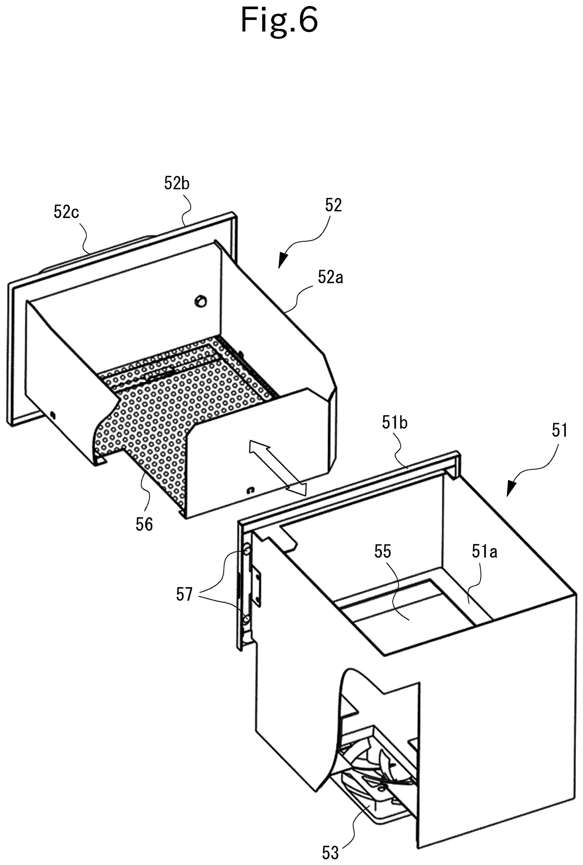

As shown in Figure 6, the bean storage box 52 includes a box-shaped main body 52a in which an upper part opens, a lower part has four sides leaving an outer frame of 10 mm wide, and a center part opens, a punched metal member 56 is disposed on a bottom side of the main body 52a to store beans on an upper side of the punched metal member 56 and to cool the beans by air blown from a lower side of the punched metal member 56.

Since an end surface of the punched metal member 56 is bent downward by 5 mm to be located 5 mm above the surface of the outer frame of 10 mm wide, the cooling air from a lower surface of the punched metal member 56 can reach evenly the beans located above the outer frame of 10 mm wide.

In addition, a part of the bean cooling box 51 corresponding to the outer frame (10 mm wide) of the bean storage box 52 also becomes a sealing surface 51a, and thus, like the bean storage box 52, the center is open while leaving the outer frame (10 mm wide) on four sides, whereby the air from the bean cooling fan 53 is kept airtight by the sealing surface 51a and the air passes through only the opening portion.

A front plate 52b of the bean storage box 52 is formed to have a size that covers the opening portion of the bean cooling box 51 and a sealing surface 51b near the opening portion, and is formed of a magnetic material to adhere tightly to the sealing surface 51b with an attractive force of a magnet 57 attached to the back side of the sealing surface 51b, and the front plate 52b is provided with a handle 52c which is grasped by a hand of an operator during attachment or detachment of the bean storage box 52.

The attractive force of the magnet 57 is set to an attractive force to the extent that a large load is not applied when the operator pulls out the bean storage box 52 with the hand, and is set to an attractive force to the extent that the bean storage box does not open naturally due to a wind pressure of the bean cooling fan 53 when the bean storage box 52 is set in the bean cooling box 51 to cool the beans. The roasting machine 20 according to the present embodiment is designed to use four magnets 57, with a total attractive force of approximately 14 N.

As shown in Figure 2, the upper part of the bean cooling box 51 is connected to the lower end of the bean collection passage 47 to guide the roasted beans, which fall through the bean cooling passage 47, into the bean storage box 52. In addition, a collection passage packing 50 is provided to connect the bean cooling box 51 and the bean cooling passage 47 airtightly.

In addition, the upper part of the bean cooling box 51 is provided with an exhaust port 51c that exhausts the air blown from the bean cooling fan 53. Furthermore, the exhaust port 51c is connected to the bean cooling duct 54 which is connected to the exhaust manifold 45. Thus, the air blown into the bean cooling box 51 is exhausted to the exhaust manifold 45 through the exhaust port 51c and the bean cooling duct 54.

The bean cooling fan 53 is disposed below the bean cooling box 51, and the air blown from the bean cooling fan 53 passes through the holes of the punched metal member 56 of the bean storage box 52 through a bean cooling filter 55 as indicated by a dashed-dotted arrow in Figure 2 to cool the beans inside the box, and is then blown into the exhaust manifold 45 by passing through the bean cooling duct 54.

Here, in order to efficiently cool the roasted beans in the bean storage box 52 using the air from the bean cooling fan 53, the outer frame formed at the lower part of the bean storage box 52 needs to come in airtight contact with the corresponding sealing surface 51a of the bean cooling box 51 and the front plate 52b of the bean storage box 52 needs to come in airtight contact with the sealing surface 51b of the opening portion of the bean cooling box 51, and flatness between the components in these regions is managed to dimensions that can ensure airtightness.

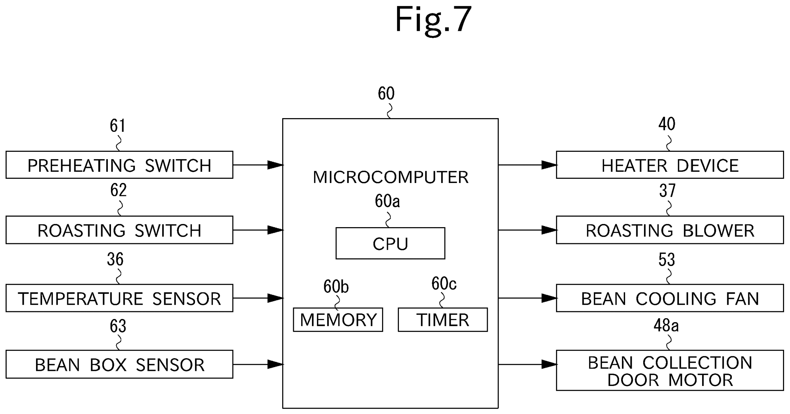

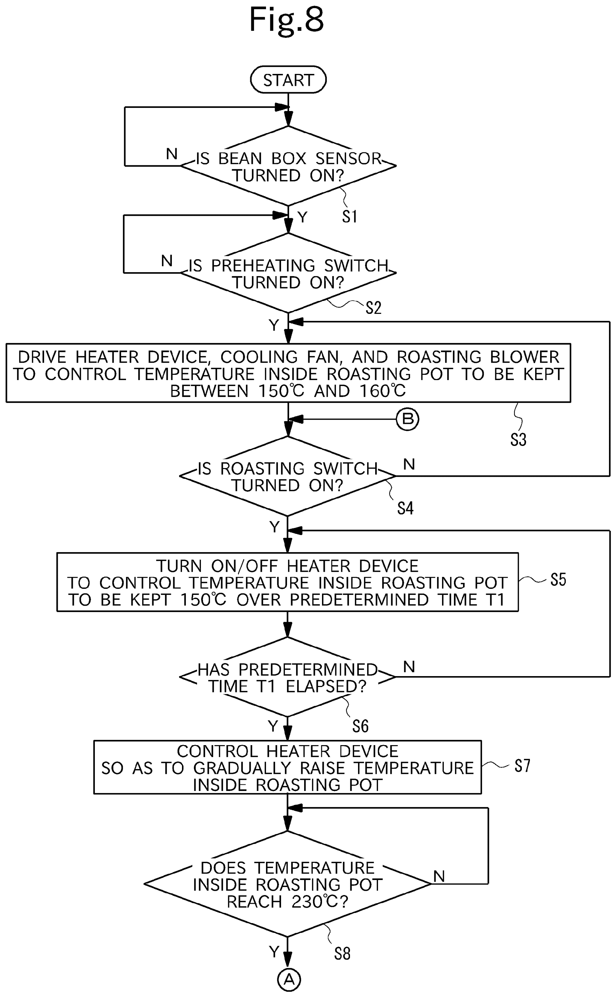

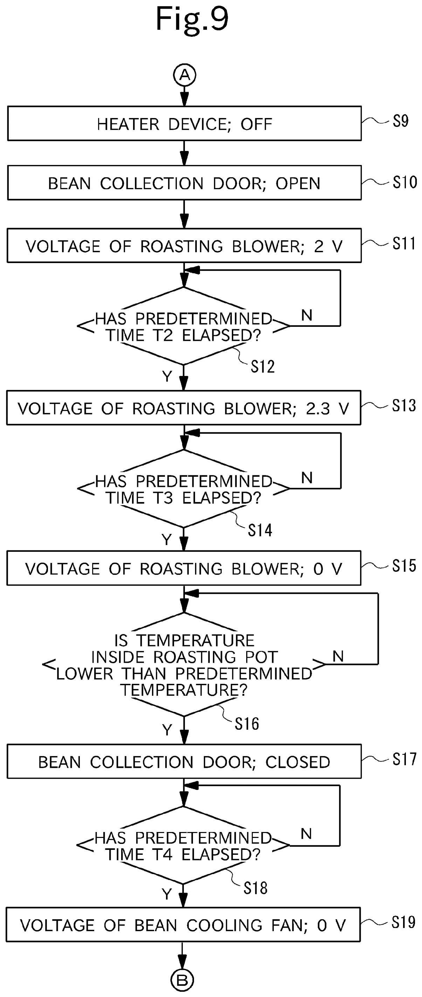

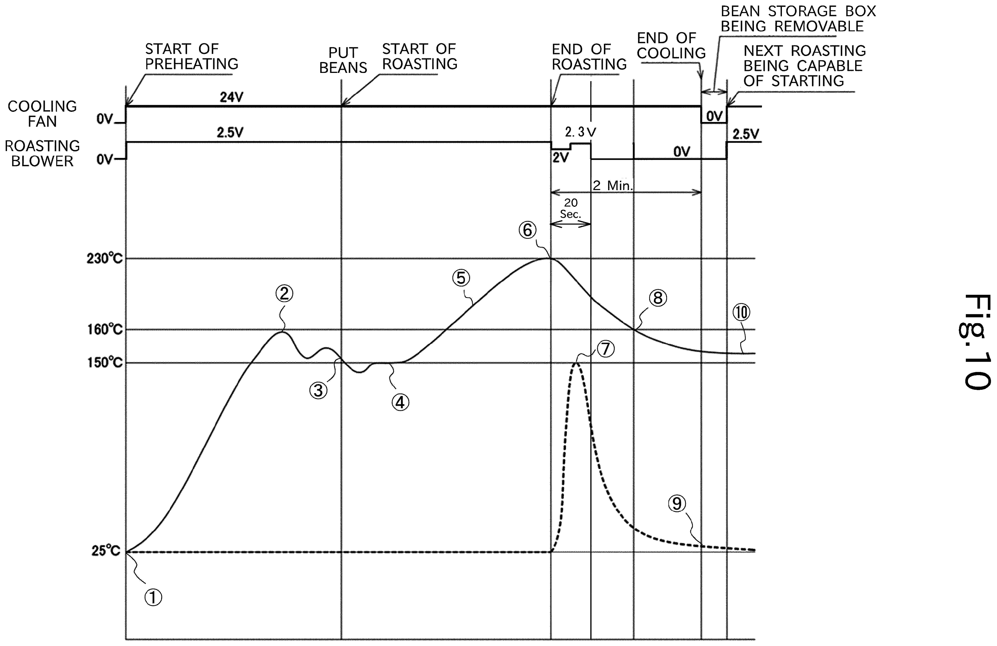

Next, operation control of the roasting machine 20 will be described with reference to a control block diagram of Figure 7, flowchart 1 of Figure 8, flowchart 2 of Figure 9, and a time chart of Figure 10.

As shown in Figure 7, the roasting machine 20 is operated and controlled by control means configured by a microcomputer 60, which includes a CPU 60a that controls each device, a memory 60b that stores a setting temperature and the like, and a timer 60c that measures an operating time of each device.

An input side of the microcomputer 60 is connected to a preheating switch 61 that instructs to preheat the inside of the roasting pot 23 for roasting, a roasting switch 62 that instructs to start roasting after the preheating, a temperature sensor 36 that detects a temperature inside the roasting pot 23, and a bean box sensor 63 that detects whether the bean storage box 52 is housed in the bean cooling box 51.

Here, the bean box sensor 63 is configured by a sensor magnet (not shown) disposed back of the lower surface of the bean storage box 52 and a reed switch (not shown) disposed at a position opposite to the magnet 57 of the bean cooling box 51, a contact of the reed switch is closed (ON) when the bean storage box 52 is attached to a normal position, and the contact is opened (OFF) when the bean storage box 52 is pulled out 2 mm from such a position. This ensures safety by preventing roasting from starting when the bean storage box 52 is not set correctly in the normal position (it is also possible to prevent beans being roasted from being discharged from the roasting pot 23).

An output side of the microcomputer 60 is connected to the heater device 40, the roasting blower 37, the bean cooling fan 53, and the bean collection door motor 48a.

This allows the devices to be controlled based on the switches 61 and 62 and the sensors 36 and 63, respectively.

In the time chart of Figure 10, a temperature detected by the temperature sensor 36 is shown by a solid line, and an air temperature at a position approximately 10 mm above the center of the punched metal member 56 in the bean storage box 52 is shown by a dashed line.

In addition, an operating state of the bean cooling fan 53 is stopped at 0 V and operating at 24 V, and an operating state of the roasting blower 37 is also stopped at 0 V and operating at other numerical values from 2 V to 2.5 V, wherein it is indicated that as the numerical value becomes larger, the rotation speed of the roasting blower 37 becomes higher and accordingly the airflow becomes greater.

Furthermore, Figure 10 shows standard temperature and time in a case where the roasting machine of the present invention roasts 200 g of raw coffee beans deeply and in a medium speed mode, the degree of roasting of the beans can be set to eight stages from light roasting to dark roasting, and the roasting time can be set to three stages of a low speed, a medium speed, and a high speed.

The operation of the roasting machine 20 will be described below with reference to Figures 8 to 10.

When power is supplied to the roasting machine 20, it is constantly monitored based on the signal detected by the bean box sensor 63 whether the bean storage box 52 is housed in the bean cooling box 51 (S1). Here, during a roasting operation, 200 g of raw coffee beans are put in the hopper 33 provided at the top and the preheating switch 61 of the roasting machine 20 is pushed (S2). Thus, preheating of the roasting machine 20 starts. Furthermore, electricity is applied to the heater device 40, a voltage of 24 V is applied to the bean cooling fan 53, and a voltage of 2.5 V is applied to the roasting blower (1 in Figure 10). Then, when the temperature inside the roasting pot 23 rises and the temperature sensor 36 detects 160°C (2 in Figure 10), and thereafter the heater device 40 repeatedly turns ON and OFF between 150°C and 160°C to control the temperature inside the roasting pot 23 to be kept constant (S3). Normally, the preheating is completed within 5 minutes. The bean collection door 49 is set to always close the bean collection hole 23h when roasting is on standby.

Subsequently, for example, after 5 minutes, the hopper lever 33a is pushed down to put raw beans into the roasting pot 23, and the roasting start switch 62 of the roasting machine 20 is pushed (S4) (3 in Figure 10). At the start of the roasting process, the temperature inside the roasting pot 23 temporarily drops due to the beans being put into the roasting pot 23, but the heater device 40 is turned ON and OFF to control the temperature detected by the sensor at 150°C based on a preset bean roasting temperature profile, and the temperature inside the roasting pot 23 is maintained at 150°C for a predetermined time T1 (S5 and S6) (4 in Figure 10). This causes moisture to evaporate from the beans inside the roasting pot 23 (bean-moisture evaporation process).

When the bean-moisture evaporation process is completed, the heater device 40 is controlled to gradually raise the temperature inside the roasting pot 23 (S7) (5 in Figure 10), and the roasting process of the beans continues. Thus, the beans inside the roasting pot 23 are roasted.

During the roasting process, chaff peeling off from the beans in the roasting pot 23 are generated. The chaff pass through the chaff collection passage 27 and the chaff bean collection duct 28 together with the hot air and enter the cyclone 42 from the upper part of the side surface of the cyclone 42. The hot air rotates swirly inside the cyclone 42, and the chaff falls into the chaff collection box 44 below by its own weight. Meanwhile, the hot air, from which the chaff is separated in the cyclone 42, is sent to the exhaust manifold 45 by passing through the exhaust duct 43 provided at the top of the cyclone 42, and is exhausted outside the roasting machine 20. Two-dot chain arrows in Figure 2 indicate the flow of the hot air exhausted from the inside of the roasting pot 23 outside the roasting machine 20.

When the temperature inside the roasting pot 23 reaches a roasting end temperature of 230°C during the roasting process of the beans, the roasting process is completed (S8) (6 in Figure 10). Upon completion of the roasting process, electricity to the heater device 40 is stopped (S9), the bean collection door 49 is opened by driving of the bean collection door motor 48a to open the bean collection hole 23h (S10), and the roasting blower 37 is driven in a state of its voltage being changed to 2 V (S11), whereby the bean collection process starts.

During the bean collection process, since the beans in the roasting pot 23 rotate circumferentially inside the roasting pot 23 due to the air blown by the roasting blower 37, the beans are guided to the vicinity of the center of the bean collection passage 47 by the bean collection guide 29, fall from the outlet 47b below the bean collection passage 47, and are stored in the bean storage box 52 through the bean cooling box 51.

Furthermore, the reason why the output of the roasting blower 37 is reduced to 2V from 2.5 V during the bean collection process is that the bean collection door 49 opens the bean collection hole 23h, which means that the roasting blower 37 has two air blowing passage to reduce ventilation resistance and the airflow inside the roasting pot 23 increases even with the same voltage. Thus, the beans inside the roasting pot 23 move around widely, and the bean collection time becomes longer, thereby reducing the output of the roasting blower 37.

In addition, both the roasting blower 37 and the bean cooling fan 53 are operated during the bean collection process, but since the airflow and the wind power of the roasting blower 37 are overwhelmingly greater than those of the bean cooling fan 53, the operation of the bean cooling fan 53 does not interfere with the bean collection operation.

As described above, after the roasting blower 37 is continuously operated at the output of 2 V for a predetermined time T2 (S12), the roasting blower 37 is operated in a state of being changed to the output of 2.3 V until a predetermined time T3 has elapsed from the start of the bean collection process (S13 and S14) . When the roasting blower 37 is operated at 2 V as described above, most of the beans in the roasting pot 23 are collected into the bean storage box 52, but some of the beans may stick to the inclined portion 23g of the roasting pot 23. Therefore, the output of the roasting blower 37 is set to 2.3 V, and the stuck beans are removed by wind and collected into the bean storage box 52.

By such a bean collection process, the roasted beans are stored in the bean storage box 52, and the temperature inside the bean storage box 52 rises to approximately 150°C (7 in Figure 10), while the air blown from the bean cooling fan 53 flows evenly into the bean storage box 52 through the punched metal member 56, causing the roasted beans inside the bean storage box 52 to be accumulated almost evenly.

The bean collection process is completed in approximately 20 seconds (T3), and at a point of time when the bean collection process is completed, the output of the roasting blower 37 is set to 0 V (S15), the operation of the blower 37 is stopped, and the process proceeds to a bean cooling process.

In addition, since the bean cooling process continues in a state where the bean collection hole 23h is opened, the air blown from the bean cooling fan 53 is blown from the bean cooling duct 54 to the exhaust manifold 45, and also from the inside of the roasting pot 23 to the exhaust manifold 45 through the chaff collection duct 28, the cyclone 42, and the exhaust duct 43 in this order. Thus, the ventilation resistance is reduced, whereby the temperature of the beans drops more quickly than when the bean collection hole 23h is closed to cool the beans.

In other words, since the bean cooling passage is provided with two systems, the ventilation resistance of the air from the bean cooling fan 53 is reduced, and the beans accumulated in the bean storage box 52 are cooled in a dancing state, whereby the air passes evenly over the outer surfaces of the beans and thus bean cooling performance is improved.

Thereafter, when the temperature inside the roasting pot 23 reaches a predetermined temperature (for example, 160°C) (S16), the bean collection door 49 is closed (S17). In other words, the temperature inside the roasting pot 23 needs to be maintained between 150°C and 160°C in order to shorten the time required for the next roasting process (to perform continuous roasting). Therefore, the bean collection door 49 is closed at a point of time when the temperature inside the roasting pot 23 reaches the predetermined temperature (160°C) (8 in Figure 10). Thus, the temperature inside the roasting pot 23 does not drop to 150°C or lower due to a heat insulation effect. Therefore, since the next roasting can be performed without preheating, it is possible to shorten both the cooling time of the beans and the time until the next roasting.

When the bean cooling process continues until a predetermined time T4 (for example, two minutes from the start of the bean collection process) has elapsed, the driving of the bean cooling fan 53 is stopped, and the bean cooling process is completed (S18 and S19). In other words, for 200 g of raw coffee beans, since the roasted beans are cooled to a temperature approximately 2°C higher than the outside air temperature within two minutes from the start of the bean collection, the voltage of the bean cooling fan 53 is reduced to 0 V to stop the bean cooling fan 53 at a point of time when two minutes have elapsed from the start of the bean collection operation, the completion of cooling is displayed on a screen display device (not shown), and a buzzer (not shown) is sounded to notify that the bean storage box 52 can be removed (9 in Figure 10).

Thereafter, when the operator removes the bean storage box 52, transfers the beans to another bowl, sets the bean storage box 52 again in the bean cooling box 51, and pushes the roasting switch 62, as shown in flowchart 1 of Figure 8, the operation can be restarted from step S4, and the continuous roasting operation can be performed (10 in Figure 10).

The roasting machine 20 according to the present embodiment has a configuration in which after being collected, the beans are cooled with the bean collection door 49 open until the temperature inside the roasting pot 23 reaches the setting temperature (threshold value) and the cooling time and the time it takes for the beans to reach a state where the beans can be roasted are shortened, and the reason for such a configuration is that tastes of bean purchasers have become more diverse in recent years, with a demand for a wider variety of bean types and roasting methods, and the functions required of roasting machines have changed so that a device capable of roasting around 200 g of raw beans in a shorter time and with a wider variety of roasting methods is more suited to the individual needs of bean purchasers than a device capable of roasting a large number of beans in one roasting as in the conventional case.

Furthermore, in the roasting machine 20 according to the present embodiment, the reason why the bean cooling fan 53 is operated continuously at 24 V from the preheating stage is to prevent the temperature inside the bean storage box 52 from rising due to radiant heat or thermal conduction from the roasting pot 23, and to keep the temperature of the air exhausted from the exhaust manifold 45 to the outside of the roasting machine 20 as low as possible, as described above.

The roasting machine 20 according to the present embodiment exhibits the following operational effects with the configuration described above.

In other words, the bean roasting machine 20, in which hot air is jetted from a central bottom of a cone-shaped roasting pot 23 in a direction oblique to a radial direction of the roasting pot 23 to stir and roast beans, includes: a heater device 40 as a heat source for roasting; and a roasting blower 37 that sends high-pressure air into the heater device 40 and sends the air becoming a high temperature by the heater device 40 into the roasting pot 23, the heater device 40 is disposed directly below the central bottom of the roasting pot 23, an air blowing outlet 40b of the heater device 40 opens upward and is directly connected to an air intake inlet 23a formed in the central bottom of the roasting pot 23, and an air intake inlet 40a of the heater device 40 is located on a side surface of the heater device 40 and is directly connected to a blowing port 37a of the roasting blower 37.

Thus, the central bottom of the roasting pot 23 is close proximity to the heater device 40, and the heater device 40 and the roasting pot 23 are directly connected to each other, whereby the air is blown from the roasting blower 37 to the heater device 40, the hot air supplied from the heater device 40 to the roasting pot 23 flows smoothly, and the heat loss and the windage loss are extremely reduced. Therefore, the heater device 40 and the roasting blower 37 can be made smaller, and power consumption can be reduced.

Furthermore, the roasting machine 20 according to the present embodiment includes: a chaff collection duct 28 through which exhaust air containing chaff within the roasting pot 23 passes; a cyclone 42 that takes in the exhaust air through the chaff collection duct 28 and separates the chaff from the exhaust air; and a chaff collection box 44 that collects the chaff separated by the cyclone 42, an upper part of a sidewall 23e of the roasting pot 23 includes an annular edge portion 23f extending vertically over a predetermined width, an inlet side of the chaff collection duct 28 is connected to the annular edge portion 23f, and an outlet side of the chaff collection duct 28 is connected to an upper part of a side surface of the cyclone 42, the chaff collection box 44 being disposed at a lower part of the cyclone 42 and being provided to be removable from a front of the roasting machine 20.

Thus, the inlet side of the chaff collection duct 28 is connected to the annular edge portion 23f formed on the sidewall 23e of the roasting pot 23, rather than to the upper surface of the roasting pot 23, whereby the chaff collection duct 28 does not protrude above the roasting pot 23, and the roasting machine 20 becomes small in the height dimension, which can be downsized. In addition, since the chaff collection box 44 can be removed from the front of the roasting machine 20, no operating space of the chaff collection box 44 is required on the side of the roasting machine 20, and operability is also improved.

Furthermore, the roasting machine 20 according to the present embodiment has a structure in which a bean collection hole 23h is provided in a part of an inclined portion 23g, which is inclined obliquely downward from a lower end of the annular edge portion 23f, of the sidewall 23e of the roasting pot 20 to discharge roasted beans, the bean roasting machine including: a bean collection mechanism 48 including a bean collection door 49 for opening and closing the bean collection hole 23h; a bean collection passage 47 that communicates with the bean collection hole 23h and guides the roasted beans discharged from the bean collection hole 23h out of the roasting pot 23; a bean cooling box 51 that communicates with an outlet 47b of the bean collection passage 47 and receives the roasted beans flowed out of the bean collection passage 47; a bean storage box 52 that is detachably housed in the bean cooling box 51 to store the roasted beans flowed into the bean cooling box 51; and a bean cooling fan 53 that is provided in the bean cooling box 51 to blow air into the bean storage box 52 and to cool the roasted beans.

Thus, when the bean collection door 49 opens the bean collection hole 23h, the roasted beans in the roasting pot 23 fall through the bean collection hole 23h and move sequentially through the bean collection passage 47, the bean cooling box 51, and the bean storage box 52. Then, the beans stored in the bean storage box 52 are cooled by the air blown out from the bean cooling fan 53. Here, since the bean cooling fan 53 is provided in the bean cooling box 51, the air blown out from the bean cooling fan hits the beans directly in the bean storage box 52 and the beans can be cooled efficiently, and thus the bean cooling fan 53 can be downsized. In addition, since the bean cooling fan 53 blows out air to send it to the bean storage box 52, the air already used to cool the beans does not flow in the bean cooling fan 53 from the bean storage box 52, whereby contamination of the bean cooling fan 53 is reduced, maintenance of the bean cooling fan 53 is made to be almost unnecessary.

To describe the operational effects in more detail, by adaptation of such a structure, the bean cooling fan 53 is sufficient to have the capacity of a typical square fan of, for example, DC 24 V and 12 W, and the cooling air from the bean cooling fan 53 is blown onto the beans to cool the beans, whereby smoke and oil from the beans do not adhere to the bean cooling fan 53. Therefore, the problem with the conventional suction method, that is, the problem is solved that when the bean cooling fan 53 is used over a long period of time, oil from the beans adheres to the bean cooling fan 53 and the caffeine contained in the smoke is recrystallized, the fan portion does not stick to the casing and become unable to rotate, whereby the operator does not need to periodically perform disassembling and cleaning on the bean cooling fan 53, which is a troublesome task.

Furthermore, the roasting machine 20 according to the present embodiment includes: a bean cooling duct 54 that is connected to an exhaust port 51c of the bean cooling box 51 to ventilate exhaust air used to cool the roasted beans; an exhaust duct 43 that is connected to the cyclone 42 to ventilate exhaust air from which chaff inside the cyclone 42 is separated; and an exhaust manifold 45 that is connected to an outlet side of the exhaust duct 43 and an outlet side of the bean cooling duct 54 to gather the exhaust air from the exhaust duct 43 and the bean cooling duct 54 and to ventilate the gathered exhaust air outside the roasting machine 20.

In this way, since the bean cooling duct 54, which ventilates the exhaust air used to cool the roasted beans, and the exhaust duct 43, which ventilates the exhaust air from the cyclone 42, are connected to a single exhaust manifold 45, not only the entire roasting machine 20 can be made more compact, but also the high-temperature exhaust air during the roasting and the room-temperature exhaust air from the bean cooling fan 53 are exhausted from one location in a state of being mixed, and thus the temperature of the exhaust air from the roasting machine 20 can be kept low, whereby the roasting machine 20 with less risk of burns or fire can be provided.

Furthermore, in the roasting machine 20 according to the present embodiment, the bean collection door 49 includes a microcomputer 60 (control means) that controls the bean collection mechanism 48 so as to close the bean collection hole 23h during roasting, open the bean collection hole 23h during bean collection, and close the bean collection hole 23h when a temperature inside the roasting pot 23 drops below a predetermined temperature during bean cooling.

Thus, in the initial stage of cooling the beans, the air exhausted from the bean cooling box 51 has two routes including a route in which air is exhausted from the exhaust port 51c and a route in which air is exhausted from the outlet side of the cyclone 40 by passing through the roasting pot 23 from the bean collection hole 23h, and windage loss can be reduced by exhausting the air from these two routes. Therefore, the beans in the bean storage box 52 are stirred in a dancing state in the wind from the bean cooling fan 53, the beans are evenly exposed to the wind, and thus the beans can be cooled in a short time. In addition, when the temperature inside the roasting pot 23 drops below a predetermined temperature, the bean collection hole 23h can be closed to maintain the temperature at which the next bean roasting can be continuously performed, whereby the time required for continuous roasting can be shortened, and the roasting machine 20 can be provided that can roast many beans in a short time using many variations of roasting methods.

### Reference Signs List

- 20: roasting machine
- 23: roasting pot
- 23a: inlet of roasting pot
- 23e: sidewall of roasting pot
- 23f: annular edge portion
- 23g: inclined portion
- 23h: bean collection hole
- 28: chaff collection duct
- 29: bean collection guide
- 37: roasting blower
- 37a: blowing port of roasting blower
- 40: heater device
- 40a: inlet of heater device
- 40b: outlet of heater device
- 42: cyclone
- 43: exhaust duct
- 44: chaff collection box
- 45: exhaust manifold
- 47: bean collection passage
- 48: bean collection mechanism
- 49: bean collection door
- 51: bean cooling box
- 51c: exhaust port of bean cooling box
- 52: bean storage box
- 53: bean cooling fan
- 54: bean cooling duct
- 60: microcomputer

## Claims

1. A bean roasting machine in which hot air is jetted from a central bottom of a cone-shaped roasting pot in a direction oblique to a radial direction of the roasting pot to stir and roast beans, the bean roasting machine comprising:
a heater device as a heat source for roasting; and
a roasting blower that sends high-pressure air into the heater device and sends the air becoming a high temperature by the heater device into the roasting pot, wherein
the heater device is disposed directly below the central bottom of the roasting pot, an air blowing outlet of the heater device opens upward and is directly connected to an air intake inlet formed in the central bottom of the roasting pot, and an air intake inlet of the heater device is located on a side surface of the heater device and is directly connected to a blowing port of the roasting blower.

2. The bean roasting machine according to claim 1, comprising:
a chaff collection duct through which exhaust air containing chaff within the roasting pot passes;
a cyclone that takes in the exhaust air through the chaff collection duct and separates the chaff from the exhaust air; and
a chaff collection box that collects the chaff separated by the cyclone, wherein
an upper part of a sidewall of the roasting pot includes an annular edge portion extending vertically over a predetermined width, an inlet side of the chaff collection duct is connected to the annular edge portion, and an outlet side of the chaff collection passage is connected to an upper part of a side surface of the cyclone, and
the chaff collection box is disposed at a lower part of the cyclone and is provided to be removable from a front of the roasting machine.

3. The bean roasting machine according to claim 1 or 2, wherein a bean collection hole is provided in a part of an inclined portion, which is inclined obliquely downward from a lower end of the annular edge portion, of the sidewall of the roasting pot to discharge roasted beans, and
the bean roasting machine includes: a bean collection mechanism including a bean collection door for opening and closing the bean collection hole; a bean collection passage that communicates with the bean collection hole and guides the roasted beans discharged from the bean collection hole out of the roasting pot; a bean cooling box that communicates with an outlet of the bean collection passage and receives the roasted beans flowed out of the bean collection passage; a bean storage box that is detachably housed in the bean cooling box to store the roasted beans flowed into the bean cooling box; and a bean cooling fan that is provided in the bean cooling box to blow air into the bean storage box and to cool the roasted beans.

4. The bean roasting machine according to any one of claims 1 to 3, comprising: a bean cooling duct that is connected to an exhaust port of the bean cooling box to ventilate exhaust air used to cool the roasted beans; an exhaust duct that is connected to the cyclone to ventilate exhaust air from which chaff inside the cyclone is separated; and an exhaust manifold that is connected to an outlet side of the exhaust duct and an outlet side of the bean cooling duct to gather the exhaust air from the exhaust duct and the bean cooling duct and to ventilate the gathered exhaust air outside the roasting machine.

5. The bean roasting machine according to claim 3 or 4, wherein the bean collection door includes control means for controlling the bean collection mechanism so as to close the bean collection hole during roasting, open the bean collection hole during bean collection, and close the bean collection hole when a temperature inside the roasting pot drops below a predetermined temperature during bean cooling.
